# EUROPEAN PATENT APPLICATION

(11) **EP 1 630 130 A1**
(43) Date of publication of application: **01.03.2006**
(21) Application number: 04103964.5
(22) Date of filing: 18.08.2004
(51) Int. Cl.: C01B 3/38, C01B 3/48, C01B 3/58

(54) **Fuel processor and method of starting up the same**

(71) Applicant: SHELL INTERNATIONALE RESEARCH MAATSCHAPPIJ B.V., 2596 HR Den Haag (NL)
(72) Inventor: Bracht, Maarten, 1031 CM Amsterdam (NL); Sevenhuijsen, Eric, 1031 CM Amsterdam (NL)

(57) **Abstract**

The invention pertains to a fuel processor (1) for converting a hydrocarbonaceous fuel into a product gas, preferably containing hydrogen and carbon dioxide, which processor (1) comprises:
- at least one catalytic zone (5B) and
- a chamber (11) for storing oxygen, which communicates with the catalytic zone (5B), or a fluid supply, which communicates with the catalytic zone (5B) and which is connected or connectable to an oxygen source.

Thus, the said catalytic zone can be heated effectively by exothermic reactions of a fuel or an intermediate product and oxygen taking place on the catalyst in the catalytic zone itself.

## Description

The present invention relates to a fuel processor for converting a hydrocarbonaceous fuel into a product gas, preferably containing hydrogen and carbon dioxide, which processor comprises at least one catalytic zone. The invention further relates to a method of starting up such a fuel processor.

Since fuel cell technology is emerging for various small-scale applications, such as on-board production of hydrogen in fuel-cell-powered vehicles and domestic systems for generating heat and power, there is a need for relatively small fuel processors that can convert hydrocarbonaceous fuel into a hydrogen-rich gas.

International patent application WO 01/79112 discloses a compact fuel processor for converting a hydrocarbonaceous fuel into hydrogen and carbon dioxide. The processor comprises, in series, a hydrocarbon conversion zone typically based on partial oxidation ("CPO") for converting the fuel into a product gas comprising carbon monoxide and hydrogen, first and second water-gas shift reaction zones (HTS/LTS) containing catalysts suitable for the respective water-gas shift conversion reactions, and a carbon monoxide removal zone (PROX).

In fuel processors, starting up is a time consuming process because the consecutively placed catalytic zones, each comprising one or more catalytic beds, must be heated to the respective working temperatures.

It is an object of the present invention to provide a fuel processor, which can be started up faster.

To this end, the fuel processor according to the present invention is characterised in that it comprises a chamber for storing oxygen, preferably in the form of a gas containing oxygen, such as air, which chamber communicates with the catalytic zone or in that it comprises a fluid supply which communicates with the catalytic zone and which is connected or connectable to an oxygen source.

Thus, the said catalytic zone can be heated effectively by exothermic reactions of a fuel or an intermediate product and oxygen taking place on the catalyst in the catalytic zone itself.

A chamber is preferred over an external source, because a chamber requires no supply conduits or valves and is inherently safer. It is further preferred that the thermal mass of the catalytic zone is less than 4 kJ/°C per meter of catalytic zone per gram oxygen to be contained in the chamber during normal operation.

The invention further pertains to a method of starting up a fuel processor for converting a hydrocarbonaceous fuel into a product gas, comprising at least one catalytic zone, wherein the heating of at least part of the catalytic zone to a working temperature is at least partially achieved by exothermic reactions taking place on the catalyst in the catalytic zone.

The fuel processor and method according to the invention will now be explained in more detail with reference to the attached schematic Figures.

Figure 1 diagrammatically shows a layout of a fuel processor according to the present invention.

Figure 2 shows the section between the HTS and the LTS in more detail.

The fuel processor 1 shown in the Figures comprises a pressure vessel 2, which is provided with suitable inlet and outlet conduits 3 and which at least accommodates one or more mixers, one or more evaporators, and three catalytic zones.

The catalytic zones comprises a first zone 4 or CPO for converting a hydrocarbonaceous fuel into an intermediate product gas comprising carbon monoxide and hydrogen, a second zone 5 or LTS/HTS for converting at least part of the carbon monoxide with steam to carbon dioxide and hydrogen, and a third catalytic zone 6 or PROX for selectively and at least partially oxidising or methanazing the remaining carbon monoxide. For suitable catalysts and fixed arrangements for catalysts, such as catalyst beds, reference may be had to international patent application WO 01/79112.

During normal operation of the fuel processor 1, a fuel, such as methane, natural gas, ethane, propane, liquefied petroleum gas (LPG), petrol, diesel, biodiesel, naphtha, methanol, or ethanol on the one hand and a molecular oxygen-containing gas, preferably air, and, optionally, also steam on the other, are charged to the vessel 2 via the said inlets 3A, 3B. The gases flow through a first mixer 7 to the hydrocarbon conversion zone 4. At the inlet of the first zone 4 (CPO), the temperature of the mixture of reactants is generally in the range of from 250 to 400 °C. The fuel is partially oxidised to form an intermediate product gas comprising carbon monoxide and hydrogen, usually having a temperature in the range of from 750 to 1100 °C at the outlet of this zone 4.

Subsequently, the intermediate product gas flows, via an evaporator 8, where the temperature of the gas is lowered and water is added, to a first water-gas shift reaction zone 5A (HTS). Typically, the temperature of the gas at the inlet of the first water-gas shift reaction zone 5A is in the range of from 300 to 450 °C. During exothermic water-gas shift, the amount of carbon monoxide is reduced and the intermediate product gas is heated typically to a temperature in a range of from 350 to 530 °C.

The intermediate product gas then flows from the outlet of the first water-gas shift zone 5A, via a second evaporator 9, to the inlet of a second water-gas shift reaction zone 5B (LTS). Typically, the temperature of the gas at the inlet of the second water-gas shift reaction zone 5B is in a range of from 180 to 300 °C, typically 260 °C. The intermediate gas is once more water-gas shifted with the remaining water into carbon dioxide. The temperature of the effluent of the second water-gas shift reaction zone 5B will typically be in a range from 210 to 330 °C, due to adiabatic temperature increase.

The intermediate product gas flows from the outlet of the second water-gas shift zone 5B, via a second mixer 10, to the third catalytic zone 6, where the gas is cooled and remaining carbon monoxide is selectively oxidised to carbon dioxide, preferably to obtain an effluent having a carbon monoxide concentration of less than 100 ppmv, preferably less then 50 ppmv, more preferable less than 20 ppmv.

From the temperatures mentioned above, it is apparent that it will take considerable time to heat up all components of the fuel processor to the required working temperatures. One way of heating the processor is feeding hot burner exhaust gases to the processor. Although this is an effective way of heating upstream components, such as the first zone 4 (CPO), heating of downstream components, in particular of the second water-gas shift reaction zone 5B (LTS) will still take several minutes, which, for many applications, is not practical.

To accelerate starting up, the preferred fuel processor 1 according to the present invention comprises a chamber 11 for storing oxygen, which communicates with the catalytic second water-gas shift reaction zone 5B (LTS).

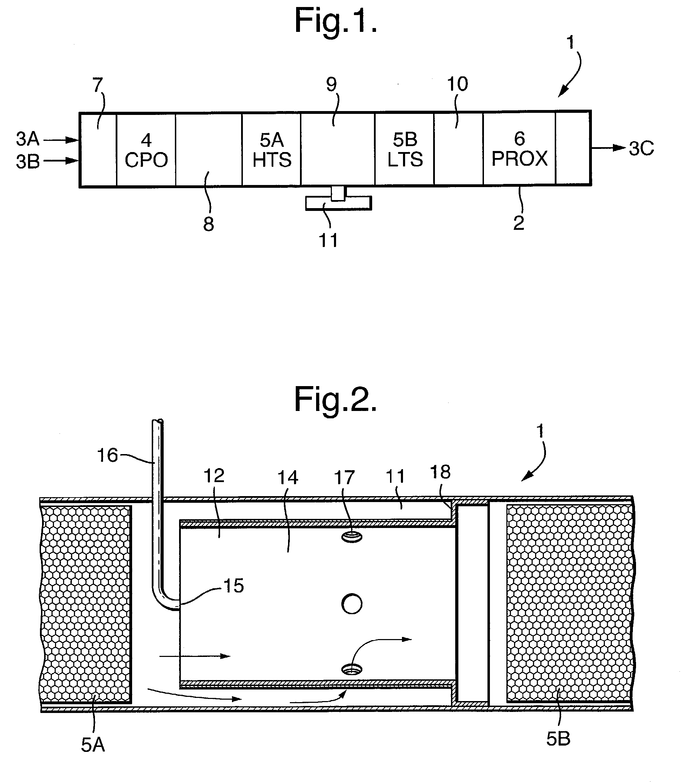

In a particularly preferred embodiment, shown in Figure 2, a hollow member comprising an inlet portion 12 and a substantially cylindrical main portion 14, is located between the first and second water-gas shift reaction zones 5A, 5B. A nozzle 15 for injecting water into the hollow member, which primarily serves as an evaporator (9), is located in the centre of the inlet portion 12 and connected via a conduit 16 to an external water supply (not shown).

The main portion 14 of the hollow member is provided with a plurality of openings 17, in this example six round openings located approximately halfway (seen in the axial direction) and evenly distributed over the circumference of the main portion 14.

Further, the hollow member is attached to the inner wall of the vessel 2, by means of an annular baffle 18. In this configuration, the space delimited by this baffle 18, the inner wall of the vessel 2, the outer wall of the main portion 14 and the axial position of the openings 17 forms an annular space 11.

During operation, the main part of the intermediate product gas from the first water-gas shift reaction zone 5A (HTS) flows through the inlet portion 12 (as indicated by a straight arrow). The remainder of this gas flows along the outer wall of the inlet portion 12 and the main portion 14, until it reaches the openings 17, and flows through these openings 17 (curved arrow) to mix again with the main part of the gas. I.e., the said annular space 11 is outside the main fluid flow path and is effectively a dead volume or pocket, which serves a chamber 11 for storing oxygen.

When starting up the fuel processor 1, the first catalytic zone 4 (CPO) will reach its working temperature relatively fast and will start producing an intermediate product gas containing carbon monoxide and hydrogen, which flows along the main fluid flow path. Air, more specifically oxygen, trapped in the annular space 11 during an idle period or previous flushing, will gradually diffuse into the main fluid flow path, and exothermically react with the intermediate product gas as soon as it reaches the catalyst in the second water-gas shift reaction zone 5B (LTS). As a result, this zone 5B, which, in the present configuration, forms a bottleneck during the start up of the processor 1, is heated locally and effectively, thus significantly reducing the time needed to complete the start up.

In this respect it is noted that those parts of the catalytic zone that reach working temperature first, will also contribute to reducing start up time because the water-gas shift reaction itself is exothermic and heat generated in those parts through this reaction will accelerate heating of the parts that have not yet reached the working temperature.

It is preferred that, during start up and before feeding a mixture of a fuel and oxygen to the fuel processor, an oxygen rich gas, such as air of exhaust gases from a burner, is fed to the fuel processor thus filling the chamber with the said gas. Filling of the chamber followed by controlled diffusion of the oxygen can be improved by feeding the oxygen rich gas to the fuel processor at a lower mass flow rate than the said mixture.

In the present embodiment, the catalyst in the second water-gas shift reaction zone 5B (LTS) a noble metal catalyst, for instance platinum supported on alumina or zirconia, which, in addition to catalysing the water-gas shift reaction is also suitable for burning a mixture of hydrogen, carbon monoxide and oxygen. In more general terms, it is preferred that the catalytic zone that is to be heated, during start-up and in accordance with the present invention, is, in addition to catalysing the chemical reaction for which it is intended, suitable for exothermically reacting a mixture of the gas coming from the nearest upstream zone and oxygen.

Further, the volume of the chamber is preferably adapted to the thermal mass of the catalytic zone that is to be heated. Preferably, the volume should be such that the thermal mass of the catalytic zone (5B) is less than 4 kJ/°C per meter of catalytic zone per gram oxygen to be contained in the chamber, if only part of the zone, preferably the first few centimetres, is to be heated by means of the oxygen. If the entire catalytic zone is to be heated in this way, it is preferred that the thermal mass of the catalytic zone is less than 1.5 kJ/°C per gram oxygen to be contained in the chamber. As a matter of course, the amount of oxygen to be contained in the chamber does not only depend on the dimensions of the chamber, but also on operating conditions, in particular pressure and temperature.

The invention is not limited to the above-described embodiments and can be varied in numerous ways within the scope of the claims. For instance, instead of employing two reaction zones for water-gas shift conversion, the fuel processor can contain a single reaction zone for catalytic water-gas shift conversion, preferably a zone for medium temperature shift conversion (MTS). Suitable MTS catalysts are known in the art. Also, other catalyst zones and/or two or more zones in a single fuel processor can be heated in accordance with the present invention. In the latter instance, it is preferred that two or more chambers are present.

## Claims

1. Fuel processor (1) for converting a hydrocarbonaceous fuel into a product gas, preferably containing hydrogen and carbon dioxide, which processor (1) comprises:
- at least one catalytic zone (5B) and
- a chamber (11) for storing oxygen, which communicates with the catalytic zone (5B), or a fluid supply, which communicates with the catalytic zone (5B) and which is connected or connectable to an oxygen source.

2. Fuel processor (1) according to claim 1, which comprises:
- a first catalytic zone (CPO; 4)) for converting the hydrocarbonaceous fuel into an intermediate product gas comprising carbon monoxide and hydrogen;
- a second catalytic zone (HTS/LTS; 5A/5B) for converting at least part of the carbon monoxide to carbon dioxide;
- a third catalytic zone (PROX; 6) for selectively and at least partially oxidising or methanazing the remaining carbon monoxide.

3. Fuel processor (1) according to claim 2, wherein the second catalytic zone (5) comprises an upstream section having a relatively high working temperature (HTS; 5A) and a downstream section having a relatively low working temperature (LTS; 5B).

4. Fuel processor (1) according to claim 2 or 3, wherein the chamber (11) or the fluid supply communicates with the second catalytic zone (5) respectively the downstream section (5B) of the second catalytic zone (5).

5. Fuel processor (1) according to any one of the preceding claims, which defines a main fluid flow path passing through the at least one catalytic zone (5B) and wherein the chamber (11) is located outside the main fluid flow path.

6. Fuel processor (1) according to claim 5, wherein the chamber (11) is located laterally from the main fluid flow path.

7. Fuel processor (1) according to claim 5 of 6, wherein the chamber (11) comprises an annular lumen surrounding the main fluid flow path.

8. Fuel processor (1) according to any one of the preceding claims, wherein the thermal mass of the catalytic zone (5B) is less than 4 kJ/ °C per meter of catalytic zone per gram oxygen to be contained in the chamber.

9. Fuel processor (1) according to any one of the preceding claims, which comprises a pressure vessel (2) and wherein all the said catalytic zones (4, 5, 6) are accommodated inside this vessel (2).

10. Method of starting up a fuel processor (1) for converting a hydrocarbonaceous fuel into a product gas, comprising at least one catalytic zone (5B), wherein the heating of at least part of the catalytic zone (5B) to a working temperature is at least partially achieved by exothermic reactions taking place on the catalyst in the catalytic zone (5B).

11. Method according to claim 10, wherein the fuel processor (1) comprises a first catalytic zone (CPO; 4) for converting the hydrocarbonaceous fuel into an intermediate product gas containing carbon monoxide and hydrogen and a second catalytic zone (HTS/LTS; 5A/5B) for converting at least part of the carbon monoxide to carbon dioxide, and wherein a fuel or an intermediate product gas from an upstream catalytic zone (4; 5A) and oxygen are supplied to the second catalytic zone (5B), and the fuel or the product gas from the upstream catalytic zone (4; 5A) are exothermically reacted with the oxygen in the second catalytic zone (5B) so as to heat this zone (5B).

12. The method of claim 11 or 12, wherein the fuel processor (1) comprises a chamber (11) for storing oxygen, which communicates with the (second) catalytic zone (5B), and wherein oxygen is supplied to the catalytic zone (5B) from this chamber (11).

13. The method of claim 12, wherein, during start up and before feeding a mixture of a fuel and oxygen to the fuel processor (1), an oxygen containing gas is fed to the fuel processor (1) thus filling the chamber (11) with the said oxygen containing gas.

14. The method of claim 13, wherein the oxygen containing gas is fed to the fuel processor (1) at a lower mass flow rate than the said mixture.
